# EUROPEAN PATENT SPECIFICATION

(11) **EP 2 957 781 B1**
(45) Date of publication and mention of the grant of the patent: **25.09.2019**
(21) Application number: 15170498.8
(22) Date of filing: 03.06.2015
(51) Int. Cl.: B64C 9/16, F16C 23/08, F16C 33/36, F16C 33/49, F16C 33/62, F16C 33/78

(54) **SUPPORT STRUCTURE OF A FLAP AT THE REAR OF AN AIRCRAFT WING WITH DOUBLE-ROW CONCAVE ROLLER BEARING**
TRAGEINRICHTUNG EINER KLAPPE AN DER HINTERKANTE EINES FLUGZEUGFLÜGELS MIT EINEM ZWEIREIHIGEN PENDELROLLENLAGER MIT KONKAVEN ROLLEN
SUPPORT D'UN VOLET À L'ARRIÈRE DE L'AILE AVEC UN ROULEMENT À ROTULE SUR ROULEAUX CONCAVES À DEUX RANGÉES

(30) Priority: 03.06.2014 US 201462007214 P; 10.12.2014 US 201462090257 P
(43) Date of publication of application: 23.12.2015
(73) Proprietor: Roller Bearing Company of America, Inc., Oxford, CT 06478 (US)
(72) Inventor: Habibvand, Alex, Orange, CA 92867 (US); Cowles, John H. Jr, Unionville, CT 06085 (US); Murphy, Richard, Torrington, CT 06790 (US)
(74) Representative: Bjerkéns Patentbyrå KB (Stockholm)

(56) References cited:
- EP-A1- 0 649 990
- WO-A1-2014/021958
- JP-A- 2006 266 277
- US-A- 2 678 246
- US-A- 2 764 432
- US-A- 2 767 037
- US-A- 3 594 851
- US-A- 4 557 613
- US-A- 4 929 098
- US-A1- 2008 040 886
- US-A1- 2013 108 200
- US-A1- 2013 112 814

## Description

### Field of the Invention

The present invention relates generally to a bearing installed on an aircraft structure. In particular, the present invention relates to an hourglass bearing in a drop linkage assembly of a trailing edge flap arrangement of an aircraft, for example an Airbus A-350 aircraft. The present invention further relates to corrosion resistant nitrogen (CREN) bearing materials and more specifically to a bearing made from XD15NW® (XD15NW is a registered trademark of AUBERT & DUVAL COMPANY, FRANCE) (AMS 5920), Cronidur 30® (CRONIDUR is a registered trademark of Energietechnik Essen GmbH, GERMANY) (AMS 5925), or 422 stainless (AMS 5655), a composite seal, a cage for an hourglass bearing and an hourglass roller profile, and to corrosion resistant steel (CRES) bearing materials and more specifically to a bearing made from 440C stainless steel (AMS5630, AMS 5618, AMS 5880), a composite seal, a cage for an hourglass bearing and an hourglass roller profile.

### Background of the Invention

There are many types of bearings that are used in various applications. Such bearings include journal bearings, roller bearings, spherical bearings and hourglass type bearings. In general, these bearings have an inner race that is disposed at least partially in an outer race. The inner race and outer race are movable relative to one another. There is an annular cavity between the inner race and the outer race that typically contains a lubricant. One well known problem with bearings is the ingress of debris and contaminants into the annular cavity which can cause premature failure of the bearings due to degradation of the lubrication. Moreover, operation of the bearing can cause the lubricant to inadvertently escape from the annular cavity.

In an effort to mitigate the aforementioned problems, seals have been positioned across the annular cavity to maintain the lubricant in the cavity and to prevent the ingress of debris into the annular cavity. However, during operation, such seals become dislodged from the bearing and fail to function. In addition, such seals have often been too flexible, thereby allowing the seal to glide over debris and sweep the debris into the annular cavity.

Referring to FIG. B1, typical hourglass roller bearings 500, include an inner member 510, for example a ball, surrounded by an outer member 512. A plurality of hourglass shaped rollers 515 are disposed between the inner member 510 and the outer member 512. The inner member 510 defines a radially outwardly facing convex bearing surface 520. The outer member 512 defines a first radially inwardly facing convex bearing surface 522A and a second radially inwardly facing convex bearing surface 522B. Each of the rollers 515 has a concave exterior surface 525 extending between axial end faces 525A and 525B of the roller 515.

When bearings are operated at high loads, the typical rollers 515 can experience a detrimental effect referred to as "end-stress." As shown in FIG. B2, each of the rollers 515 has an effective length LE that extends between axially outermost portions of two high stress zones 535A and 535B. The concave exterior surface 525 of the typical hourglass roller 515 has a constant radius of curvature RC over the entire effective length LE. As shown in FIG. B3, typically the peak surface stress 550P occurs in the high stress zones 535A and 535B. The peak surface stress 550P causes accelerated wear of: 1) the radially outwardly facing convex bearing surface 520; 2) the first radially inwardly facing convex bearing surface 522A; 3) the second radially inwardly facing convex bearing surface 522B; and 4) the concave exterior surface 525 of the roller 515.

For example, FIG. B4 illustrates the outer member 512 having a line of surface distress 555 extending circumferential around a portion of the first radially inwardly facing convex bearing surface 522A, shown after testing (but before spalling) with a prior art hourglass shaped roller 515. FIGS. B5 and B6 illustrate the inner member 510 having lines of surface distress 555A, 555B, 555C and 555D at four locations where the high stress zones 535A and 535B of the prior art roller 515 contact the inner member 510, shown after testing (but before spalling). FIG. B7 illustrates additional wear in the form of spalling 566 on the radially outwardly facing convex bearing surface 520 of the inner member 510. FIG. B8 illustrates the prior art roller 515 having lines of burnished material 577 at an edge of the effective length LE that extends between the axially outermost portions of two high stress zones 535A and 535B.

Typical bearings include an inner member, for example a ball, surrounded by an outer member. A typical roller bearing includes a plurality of rollers disposed between the inner member and the outer member. A typical hourglass bearing includes a plurality of hourglass shaped rollers disposed between the inner member and the outer member. The inner member defines a radially outwardly facing convex bearing surface. The outer member defines a first radially inwardly facing convex bearing surface and a second radially inwardly facing convex bearing surface. Each of the rollers has a concave exterior surface extending between axial end faces and of the roller.

Corrosion is a major cause of bearing failure on aerospace structures. Corrosion can be due to moisture, salt spray, cleaning fluids, etc. There are several ways to prevent corrosion which include plating, such as Cadmium, on standard steel product, and the use of stainless steels. Stainless steels have differing corrosion resistance. CREN steels have much more corrosion protection than typical stainless steels used in bearings such as 440C (AMS 5630) Corrosion of the inner member, of the rollers and of the outer member impedes the ability of the bearing to function as intended. For example, a corroded bearing is less efficient than a bearing that has not undergone corrosion due to increased friction between contact surfaces as a result of said corrosion.

Bearings are typically used in aircraft wing flap arrangements. For example, U.S. Patent No. 8,714,493 describes a trailing edge flap arrangement for an aircraft wing that includes a drop linkage arrangement that includes one or more bearings.

US 2013/0112814 A1 discloses an edge flap arrangement for an aircraft wing. The arrangement comprises a linkage arrangement supporting a flap element from the aircraft wing for movement relative to the aircraft wing. The linkage arrangement includes a lever arm, a main lever, a main tube and at least one drive strut. The lever arm is pivotally attached at a first end to a flap and is pivotally connected at a second end to a first end of the main lever. A second end of the main lever is provided with a first engagement element for engaging with a second engagement element incorporated into or associated with the main tube. The main tube is pivotally connected to a proximal end of the drive strut. A distal end of the drive strut is pivotally attached to the droop panel.

EP 649990 A1 discloses a self-aligning roller bearing. The device includes an inner race member having a spheroidal inner race surface, an outer race member including a pair of convex outer race surfaces opposing the inner race surface, and a plurality of rollers arranged in axially oppositely inclined rows. Each roller includes a concave longitudinal profile having a radius of curvature greater than the radius of curvature of each of the spheroidal inner race surface and the associated convex outer race surface.

US 2,767,037 discloses a similar hour glass bearing assembly with a seal construction which prevents the seal to be damaged.

US 3,594,851 discloses a hinge provided with an angular contact self-aligning rolling bearing with hourglass type rollers to connect a control surface to a wing of an aircraft.

### Summary of the Invention

The present invention resides in an edge flap arrangement as defined in claim 1.

### Description of the Drawings

FIG. A1 is a cross-sectional view of a portion of a bearing in accordance with one embodiment of the present invention;
FIG. A2A is an edge view of a composite annular seal assembly for the bearing shown in FIG. A1;
FIG. A2B is a side view of the composite annular seal assembly for the bearing shown in FIG. A1;
FIG. A3 is an enlarged view of a portion of the composite annular seal of FIG. A1;
FIG. A4 is a cross sectional view of the bearing of FIG. A1 with the composite seal assembly shown in a laterally deflected state during installation into the bearing;
FIG. A5 illustrates schematically a cross section through an aircraft wing having a trailing edge flap arrangement in accordance with the invention shown in its retracted position;
FIG. A6 illustrates the aircraft wing with the flap arrangement partially deployed;
FIG. B1 is a perspective view of a cross section of a prior art hourglass bearing;
FIG. B2. is a front view of a prior art hourglass shaped roller;
FIG. B3 is a three dimensional plot of surface stress versus axial length and circumferential length of a prior art hourglass shaped roller;
FIG. B4 is a photograph of an outer member after testing with a prior art hourglass shaped roller;
FIG. B5 is a photograph of an inner member after testing with a prior art hourglass shaped roller;
FIG. B6 is a photograph of an inner member after testing with a prior art hourglass shaped roller;
FIG. B7 is a photograph of an inner member after testing with a prior art hourglass shaped roller;
FIG. B8 is a photograph of a prior art hourglass shaped roller after testing;
FIG. B9 is a perspective view of a cross section of an hourglass bearing having the rollers of the present invention;
FIG. B10 is a cross sectional view of one of the rollers of the hourglass bearing of FIG. B9;
FIG. B11 is an enlarged cross sectional view of a portion of the roller of FIG. B10;
FIG. B12 is a three dimensional plot of surface stress versus axial length and circumferential length of the hourglass shaped roller of the present invention;
FIG. B13A is a schematic cross sectional view of a portion of the roller of FIG. B10;
FIG. B13B is a schematic cross sectional view of a portion of one embodiment of a roller similar to that of FIG. B10;
FIG. D2 is a perspective view of a portion of a cage for the hourglass bearing of FIG. D1;
FIG. D3 is a side view of a portion of the cage of FIG. D2, taken from a central axis of the cage;
FIG. D4 is a cross sectional view of a portion of the cage of FIG. D3 taken across section A-A;
FIG. D5 is a cross sectional view of a portion of the cage of FIG. D3 taken across section B-B;
FIG. D6 is a top cross sectional view of a portion of the cage of FIG. D3 taken across line 6-6 and illustrating a cylindrical roller pocket;
FIG. D7 A is a perspective view of the cage of the present invention;
FIG. D8 is an enlarged view of the cage of FIG. D7; and
FIG. D9 is a perspective view of the hourglass bearing having the cage of the present invention of FIG. D1, wherein the cage is shown.

### Detailed Description of the Invention

In reference to FIG. A1, a roller bearing apparatus 100 in accordance with the present invention is shown. In the embodiment illustrated in FIG. A1, the bearing 100 is an angular contact self-aligning bearing having hourglass type rollers 45, 47 as described herein. The bearing 100 has a composite annular seal assembly 70 (e.g., a sandwich seal) positioned on opposing ends thereof, as described further herein. The composite annular seal assembly 70 inhibits the ingress of contaminants into internal areas of the bearing 100 and egress of lubricant therefrom, as described herein.

As shown in FIG. A1, the bearing 100 includes an inner race 30 and an outer race 50. The inner race 30 includes an inner race surface 36. The inner race surface 36 is generally convex. The inner race 30 defines a bore 34 extending therethrough. In some embodiments, the bore 34 may be coaxial with a central axis 32 of the inner race 30. In other embodiments, the bore 34 may be parallel to and radially displaced from the central axis 32 of the inner race 30, i.e. eccentric. A shaft (not shown) may be received in the bore 34. The shaft may be fixed about the central axis 32 relative to the inner race 30 by, for example, an interference fit between the shaft and the bore 34. It should be understood that although an interference fit is described in reference to the embodiment shown in FIG. A1, the present invention is not limited in this regard and the shaft may be fixed relative to the bore 34 of the inner race 30 using other known techniques, including, for example, welding, thermal installation, pinning, or by providing a bore and shaft with similarly shaped angular cross-sections to inhibit rotation slippage. In yet other embodiments, the inner race 30 and the shaft are the same component. In yet other embodiments, the shaft may be rotatable relative to the inner race 30.

The outer race 50 is annular about a central axis 52 of the outer race 50. The central axis 52 is coaxial with the central axis 32 of the inner race 30 when the bearing is aligned. It should be understood that the central axis 32 of the inner race 30 and the central axis 52 of the outer race 50 may be parallel and laterally displaced, for example, when the bearing 100 is subject to a radial force.

In the embodiment illustrated in FIG. A1, the outer race 50 defines a first outer race surface 54 and a second outer race surface 56, and each of the first and second outer race surfaces 54, 56 is generally opposite the inner race surface 36. Each of the first and second outer race surfaces 54, 56 is generally convex. The first outer race surface 54 and the inner race surface 36 define a first raceway 44 and the second outer race surface 56 and the inner race surface 36 define a second raceway 46.

As illustrated in FIG. A1, the bearing 100 also comprises a plurality of first rollers 45 disposed in the first raceway 44, and a plurality of second rollers 47 disposed in the second raceway 46. Each of the plurality of first rollers 45 defines a first concave outer surface 48 that generally conforms to the convex surfaces of the inner race surface 36 and the first outer race surface 54. Each of the plurality of second rollers 47 defines a second concave outer surface 49 that generally conforms to the convex surfaces of the inner race surface 36 and the second outer race surface 56. This type of roller 45, 47 is generally referred to as an hourglass roller because of its generally concave surface extending between its ends. The bearing 100 further includes a cage 60 disposed between the inner race 30 and the outer race 50. The rollers 45, 47 and the cage 60 facilitate rotation of the outer race 50 relative to the inner race 30. The cage 60 also facilitates precessing of the rollers 45, 47 so that each of the rollers 45, 47 cycle through a load zone, even though the bearing 100 may be subject to an oscillatory rotation.

The outer race 50 defines a circumference 53 which includes a plurality of equally-spaced holes 51 therethrough for receiving a lubricant. The plurality of holes 51 provide fluid communication from an area outside the outer race 50 to a cavity 40 defined by the inner race 30 and outer race 50 and including the first raceway and the second raceway 44, 46. The plurality of holes 51 allow lubricant to be introduced and maintained in the first and second raceways 44, 46.

As shown in FIG. A1, the bearing 100 includes a first composite annular seal assembly 70 at or proximate to a first end 22 of the bearing 100 and a second composite annular seal assembly 70' at or proximate to a second end 24 of the bearing 100. The composite annular seal assemblies 70, 70' facilitate retention of lubricant in the first and second raceways 44, 46 and inhibit the ingress of contaminants into the first and second raceways 44, 46. The first composite annular seal assembly 70 extends from the first outer race surface 54 to the inner race surface 36; and the second composite annular seal assembly 70' extends from the second outer race surface 56 to the inner race surface 36. The composite annular seal assemblies 70, 70' are positioned axially adjacent to the cage 60. In one embodiment as shown with respect to the second composite annular seal assembly 70', the composite annular seal assembly 70' is positioned axially adjacent to the cage 60 and spaced apart therefrom by a distance D9 as shown in FIG. A1. In one embodiment, the composite annular seal assemblies 70, 70' define a substantially flat configuration and are positioned substantially parallel to one another. The disclosed hourglass roller bearing 100 may be subject to oscillatory rotation about its central axis 32, 52. In addition, the bearing 100 is angularly displaceable. For example, the central axis 52 of the outer race 50 may become angularly displaced from the central axis 32 of the inner race 30. To the extent the bearing 100 becomes angularly displaced as a result of an external force, the bearing 100 is configured to self-align. The inventors have discovered that bearing seals currently on the marketplace tend to dislodge or fail when such a bearing is subject to such angular displacement. The inventors have discovered that the composite annular seal assembly 70, 70' disclosed in the present application overcomes one or more of these problems associated with known seals, and is better capable of retaining its position when the bearing is subject to angular displacement.

As shown in FIG. A2A, the first composite annular seal assembly 70 is generally annular and defines a bore 71 extending therethrough. At least a portion of the inner race 30 extends through the bore 71 as shown in FIG. A1. The first composite annular seal assembly 70 includes a first annular retaining ring 72 and a second annular retaining ring 74. The first and second annular retaining ring 72, 74 are generally annular, have a bore extending therethrough, and are often referred to as "seal caps."

Referring to FIGS. A1 and A2B, the resilient ring 76 is disposed, i.e. sandwiched, between the first annular retaining ring 72 and the second annular retaining ring 74. In the front view of the composite annular seal 70 of FIG. A2A a portion of the first annular retaining ring 72 is shown cut away to illustrate the resilient ring 76 positioned thereunder. In FIG. A2A, a portion of the resilient ring 76 is cut away to illustrate the second annular retaining ring 74 thereunder. As shown in FIGS. A2A, A2B, and A3, the composite annular seal assembly 70 defines an outer radial end 73 defined by a first radially outermost portion 72X of the first annular retaining ring 72, a second radially outermost portion 74X of the second annular retaining ring 72 and a third radially outermost portion 76X of the resilient ring 76. The first radially outermost portion 72X of the first annular retaining ring 72, the second radially outermost portion 74X of the second annular retaining ring 72 and the third radially outermost portion 76X are aligned with one another at the outer radial end 73.

As best shown in FIGS. A1, A2A and A3, the resilient ring 76 extends from the third radially outermost portion 76X radially inward to an inner radial end 76Y. The inner radial end 76Y is positioned radially inward from an inner radial end 72Y of the first annular retaining ring 72 and is positioned radially inward from an inner radial end 74Y of the second annular retaining ring 74. In one embodiment the resilient ring 76 has a width W1 and the first annular retaining ring 72 and the second annular retaining ring 74 each have a width W2. The width W2 is less than the width W1. In one embodiment, the width W2 is between about 70 percent and 90 percent of the width W1.

As shown in FIG. A1, the first end 73 of the composite annular seal assembly 70 is received in a radially inward facing groove 57 defined in the outer race 50 adjacent to or proximate the first outer race surface 54 and a lip 50K (see FIG. A3) located at the first end 22 of the bearing 100. In the embodiment shown in FIG. A1, the groove 57 defines a channel width T1. The groove is defined by opposing side walls 57W and a base 57B extending between the opposing side walls 57W, as shown in FIG. A3. As best shown in FIG. A2B, the first end 73 of the composite annular seal assembly 70 defines a thickness T2, wherein T2 includes a thickness T5 of the first annular retaining ring 72, a thickness T6 of the second annular retaining ring 74 and a thickness T4 of the resilient ring 76. In one embodiment, T1 is greater than T2 to allow the first end 73 of the seal 70 to be snap-fit and retained in the groove 57 between the side walls 57W. The snap-fit is accomplished by laterally deflecting the composite annular seal 70 so that the first end 73 thereof is deflected radially inward to clear the lip 50KL and allow the first end 73 to snap into the groove 57, as described further herein with reference to FIG. A4.

While the composite annular seal assembly 70 is described as being seated and secured in the groove 57 using a snap-fit assembly, the present invention is not limited in this regard as other means for securing the composite annular seal assembly 70 in the groove 57, such as for example, installing the first end 73 of the composite annular seal assembly 70 in the groove 57 by using an adhesive, or some other known means, may be used without departing from the broader aspects of the invention.

The inner radial end 76Y of the resilient ring 76 slidingly engages (i.e., laterally and circumferentially) the inner race surface 36 of the inner race 30 adjacent to the first end 22 of the bearing 100 when the first composite annular seal assembly 70 is received in the groove 57 and the inner race 30 is disposed in the outer race 50. As described above, the first end 73 of the composite annular seal assembly 70 is received in the radial groove 57 defined in the outer race 50. As a result, the resilient ring 76 and the first and second retainers 72, 74 are axially secured inside the groove 57. The composite annular seal assembly 70 exhibits a tolerance stack-up such that retention inside the groove 57 by additional means is not necessary. However, use of such additional means for axial retention of the resilient ring 76 and the first and second annular retaining rings 72, 74 inside the groove 57, such as use of adhesives, is considered within the scope of the invention. Similarly, the resilient ring 76 is retained between the first and second annular retaining ring 72 and 74 by the press fit inside the groove 57 such that additional means is not necessary. However, use of such additional means for retaining the resilient ring 76 between the first and second annular retaining ring 72 and 74, such as us of adhesives or mechanical fasteners, is considered within the scope of the invention.

The resilient ring 76 is more compressible and flexible than the first annular retaining ring 72 and the second annular retaining ring 74. For example, resilient ring 76 is made from polytetrafluoroethylene (PTFE) and the first annular retaining ring 72 and the second annular retaining ring 74 are metallic. In one embodiment the first annular retaining ring 72 and the second annular retaining ring 74 are manufactured from a metal sheet stock, for example, stainless steel sheet stock and plain carbon steel sheet stock. However, the present invention is not limited in this regard as any materials may be used for the resilient ring 76, the first annular retaining ring 72 and the second annular retaining ring 74 without departing from the broader aspects disclosed herein.

Depending on the size of the bearing 100, the thickness T4 of the resilient ring 76 is between about 0.010 inch and about 0.064 inch. In one embodiment, the thickness T5 of the first annular retaining ring 72 and the thickness T6 of the second annular retaining ring 74 are each about 0.008 inches to about 0.063 inches.

The second composite annular seal assembly 70' is similar in design and construction to the first composite annular seal assembly 70, and is therefore not described in detail herein. Although the hourglass bearing is shown as having a first raceway 44 and a second raceway 46, the present invention is not limited in this regard, and the composite annular seal assembly in accordance with the present invention may by employed on an hourglass roller bearing having only a single row of rollers. It has been discovered that the benefit of the disclosed composite annular seal assembly design is that it facilitates the oscillatory movement of the bearing 100, while remaining stable and in position.

Referring to FIG. A4, the groove 57 has a diameter D3 measured between opposing base portions 57B. A diameter D1 is defined between points of contact P of the inner radial end 76Y of the resilient seal 76 with the inner race surface 36. The outer race 50 defines the lip 50K axially outward from the groove 57. The lip 50K defines a bore 50B having a diameter D2. As shown in FIG. A2A, the composite annular seal assembly 70 has an outside diameter D4 and the resilient ring 76 has an inside diameter D5. In one embodiment, the diameter D2 of the bore 50B is less than the diameter D4 of the composite annular seal assembly 70 to allow the composite annular seal assembly 70 to be laterally elastically deformed, for example, by laterally deflecting the composite annular seal 70 into a deflected state as indicated by element number 70' in FIG. A4 so that the first end 73 thereof is deflected radially inward to clear the lip 50K and allow the first end 73 to be snap-fit into the groove 57.

Referring to FIG. A5, an aircraft wing includes a main fixed wing portion 1 and a single slotted trailing edge flap arrangement 2. The flap arrangement 2 includes a main element 3 and an auxiliary flap element 4 supported by the main flap element 3. The main flap element 3 is pivotally supported from the fixed wing portion 1 by a drop hinge linkage arrangement 5. The drop hinge linkage arrangement 5 includes a fixed strut 5a, a hinge point 5b and a drop link 5c. The fixed strut 5a is mounted to the fixed wing portion 1 and carries the hinge point 5b. The drop link 5c connects the main flap element 3 to the hinge point 5b. The auxiliary flap element 4 is supported by a rail 6 mounted to the main flap element 3. The auxiliary flap element 4 is slidably disposed upon the rail 6 for translational movement relative to the main flap element 3. The hinge point 5b has one of the bearings 100 (as described herein with reference to FIGS. A1-A4) mounted therein. The bearing 100 includes the seal assembly 70' disposed therein as described herein with reference to FIGS. A1-A4. While the hinge point 5b is described as having one of the bearings 100 therein, the present invention is not limited in this regard as any number of the bearings 100 may be employed in the hinge point 5b. In one embodiment, the hinge point 5b has two of the bearings 100 installed therein; and in another embodiment, the hinge point 5b has two of the bearings 100 installed therein wherein the bearings 100 comprise different sized bearings.

FIG. A5 shows the flap arrangement 2 in its retracted position. The main flap element 3 is stowed, tucked against the trailing edge of the fixed wing portion 1. The auxiliary flap element 4 is stowed in a forward position so as to be nested beneath the rear of the main flap element 3. When stowed, the auxiliary flap element 4 completes the aerofoil profile of the main flap element 3. The trailing edges of the main and auxiliary flap elements 3 and 4 are substantially coincident when the auxiliary flap element 4 is in its retracted, stowed position. As further shown in FIG. A5, the main flap element 3 includes an actuator 7 (e.g., a linear or a rotary actuator), which is connected by a linkage arrangement (not shown) to the main flap element 3. In one embodiment, the actuator 7 has one of the bearings 100 (as described herein with reference to FIGS. A1-A4) disposed therein. While the actuator 7 is described as having one of the bearings 100 therein, the present invention is not limited in this regard as any number of the bearings 100 may be employed in the actuator 7. For example, two bearings 100 are employed in a linear actuator. The bearing 100 includes the seal assembly 70' disposed therein as described herein with reference to FIGS. A1-A4. The actuator 7 provides for movement of the main flap element 3 relative to the fixed wing portion 1. In one embodiment, the actuator 7 provides for movement of the drop hinge linkage arrangement 5 which, in turn, provides for movement of the main flap element 3 relative to the fixed wing portion 1.

FIG. A6 illustrates the flap arrangement 2 in its partially extended position. The main flap element 3 is deployed by rotating it downwardly using the drop hinge mechanism 5. Movement of the main flap element 3 is effected by the rotary actuator 7 and the bearing 100 installed therein. As can be seen from FIG. A6, the auxiliary flap element 4 can remain in its stowed, fully forward position as the main flap element 3 is deployed. In this partially extended configuration, the flap arrangement 2 functions substantially identically to a standard drop hinge flap arrangement. With the main flap element 3 extended by rotation about the drop hinge mechanism 5, a slot 8 is opened up between the fixed wing portion 1 and the main flap element 3. The single slotted flap configuration shown in FIG. A6 enables high pressure air from the lower wing surface to pass through the slot 8 to energize the boundary layer over the upper surface of the main flap element 3 so as to postpone stall in a conventional manner. The single slotted trailing edge flap arrangement 2 is configured for use with an aircraft such as, for example, an Airbus A-350 aircraft.

As shown in FIG. B9, an hourglass bearing assembly is generally designated by the numeral 100. The hourglass bearing assembly 100 includes an inner raceway 110 defining a radially outwardly facing convex surface 120 having a radius of curvature Ri. The hourglass bearing assembly 100 includes an outer raceway 112 defining a radially inward facing convex inner surface 122A and 122B, each having an outer raceway radius of curvature Ro. The outer raceway 112 is positioned around the inner raceway 110. A plurality of rollers 115 is disposed between the inner raceway 110 and the outer raceway 112 in two rows. Each of the plurality of rollers 115 has an hourglass shape. Each of the plurality of rollers 115 in one row is in rolling engagement with the radially outwardly facing convex surface 120 of the inner raceway 110 and the radially inward facing convex inner surface 122A of the outer raceway 112. Each of the plurality of rollers 115 in a second row is in rolling engagement with the radially outwardly facing convex surface 120 of the inner raceway 110 and the radially inward facing convex inner surface 122B of the outer raceway 112.

As shown in FIGS. B10 and B11, each of the plurality of rollers 115 has a circular cross section symmetrical about a longitudinal axis A. Each of the plurality of rollers 115 has a first axial end 115A and a second axial end 115B and an overall length of L5. A chamfer R4 exists at each of the first axial end 115A and second axial end 115B. Each of the plurality of rollers 115 has an exterior surface 125E extending between the first axial end 115A and the second axial end 115B. A portion of the exterior surface 125E between length L4 and L3 is cylindrical. The exterior surface 125E defines a concave engagement surface 125E extending outwardly from a central portion C of the roller 115. The concave engagement surface 125E has a first radius of curvature R1 extending from the central portion C to each of two first transition zones Z1 positioned on opposing sides of the central portion C. The two first transition zones Z1 are spaced apart from one another by a distance L1. The concave engagement surface 125E has a second radius of curvature R2 extending outwardly from each of the two first transition zones Z1 to each of two second transition zones Z2. The two second transition zones Z2 are spaced apart from one another by a distance L2.

As shown in FIGS. B10 and B11, the second radius of curvature R2 is greater than the first radius of curvature R1. In one embodiment, the first radius of curvature R1 is between 50 percent and 95 percent of the second radius of curvature R2. In one embodiment, the first radius of curvature R1 is between 70 percent and 92 percent of the second radius of curvature R2.

As shown in FIG. B11, the radius of curvature Ri of the inner raceway 110 is between about 95 percent and 100 percent of R1. In one embodiment, the radius of curvature Ri of the inner raceway 110 is between about 98 percent and 100 percent of R1. The radius of curvature Ro of the outer raceway 112 is between about 95 percent and 100 percent of R1. In one embodiment, the radius of curvature Ro of the outer raceway 112 is between about 98 percent and 100 percent of the radius of curvature R1.

The exterior surface 125E defines an extended area for engagement positioned between each of the second transition zones Z2 and each of two third transition zones Z3. The two third transition zones Z3 are positioned outwardly from a respective one of the second transition zones Z2. The two third transitions zones Z3 are spaced apart from one another by a distance L3. In one embodiment, the first distance L1 has a magnitude between 40 percent and 60 percent of the third distance L3. In one embodiment, the first distance L1 has a magnitude between 48 percent and 51 percent of the third distance L3. The area for engagement rollingly engages a rolling surface of a bearing race (e.g., the radially outwardly facing convex surface 120 of the inner raceway 110 and the radially inward facing convex inner surfaces 122A and 122B of the outer raceway 112) when the roller 115 and bearing race are in a loaded condition. As shown in FIGS. B10 and B13B, in one embodiment, the exterior surface 125E transitions to a convex surface having a radius of curvature R5 positioned outwardly of the transition zone Z2. As shown in FIG. B13A, in one embodiment, the exterior surface transitions to a concave surface having a radius of curvature R5' positioned outwardly of the transition zones Z2, and wherein the radius of curvature R5' is greater than R2. There exists a smooth transition at the first transition zones Z1, at the second transition zones Z2 and the third transition zones Z3.

As shown in FIG. B11, there is a gap G1 defined between the exterior surface of the rollers 115 and the radially outwardly facing convex surface 120 of the inner raceway 110. Another gap G1' is defined between the exterior surface of the rollers 115 and the radially inward facing convex inner surfaces 122A and 122B of the outer raceway 112. The gaps Gland G1' are presented between the two first transition zones Z1 wherein the radius of curvature of the exterior surface is R1. The magnitude of the gaps G1 and G1' increase at a first rate from the central portion C, where the gaps G1 and G1' are zero, to the first transition zone Z1, since the R1 is greater than Ri and Ro, as discussed herein.

In addition, there is another gap G2 defined between the exterior surface of the rollers 115 and the radially outwardly facing convex surface 120 of the inner raceway 110. Another gap G2' is defined between the exterior surface of the rollers 115 and the radially inward facing convex inner surfaces 122A and 122B of the outer raceway 112. The gaps G2 and G2' are presented axially outward of the two first transition zones Z1 and axially inward of the two third transitions zones Z3. The magnitude of the gaps G2 and G2' increase at a second rate from the first transition zone Z1 to the second transition zone Z2, since the R2 is greater than R1 and R1 is greater than Ri and Ro, as discussed herein. The second rate of increase of the gaps G2 and G2' is greater than the first rate of increase of the gaps G1 and G1'.

As the rollers 115 are loaded there are elastic deformations of: (1) the exterior surface 125E of the rollers 115; (2) the radially outwardly facing convex surface 120 of the inner raceway 110; and (3) the radially inward facing convex inner surfaces 122A and 122B of the outer raceway 112. Thus, as the rollers 115 are loaded, the gaps G1, Gl', G2 and G2' decrease to comport with the elastic deformations.

As shown in FIG. B12, the roller 115 has an improved stress profile compared to that shown in FIG. B3 for typical rollers 515. The stress profile for the roller 115 of FIG. B12 eliminates the peak "end stress" condition. For example, FIG. B12 illustrates that the peak stress 150P of the roller occurs inwardly of the third transition zone Z3. As a result of significant testing and analysis, the inventors have discovered that the roller 115 having the exterior surface 125E configured with the first radius of curvature R1 and the second radius of curvature R2 as described herein has resulted in the improved stress profile illustrated in FIG. B12.

In one embodiment, the rollers 115 are manufactured from CREN material. In one embodiment, CREN material for the rollers 115 is manufactured from Cronidur 30®. In one embodiment, CREN material for the rollers 115 is manufactured from XD15NW®. In one embodiment, the rollers 115 are manufactured from 422 Stainless Steel.

In one embodiment, the rollers 115 are manufactured from CRES material. In one embodiment, CRES material for the rollers 115 is manufactured from 440C stainless steel. In one embodiment, the 440C stainless steel is AMS5630. In one embodiment, the 440C stainless steel is AMS 5618. In one embodiment, the 440C stainless steel is AMS 5880.

In one embodiment, the inner raceway 110 is manufactured from CREN material. In one embodiment, CREN material for the inner raceway 110 is manufactured from Cronidur 30®. In one embodiment, CREN material for the inner raceway 110 is manufactured from XD15NW®. In one embodiment, the inner raceway 110 is manufactured from 422 Stainless Steel.

In one embodiment, the inner raceway 110 is manufactured from CRES material. In one embodiment, CRES material for the inner raceway 110 is manufactured from 440C stainless steel. In one embodiment, the 440C stainless steel is AMS5630. In one embodiment, the 440C stainless steel is AMS 5618. In one embodiment, the 440C stainless steel is AMS 5880.

In one embodiment, the outer raceway 112 is manufactured from CREN material. In one embodiment, CREN material for the outer raceway 112 is manufactured from Cronidur 30®. In one embodiment, CREN material for the outer raceway 112 is manufactured from XD15NW®. In one embodiment, the outer raceway 112 is manufactured from 422 Stainless Steel.

In one embodiment, the outer raceway 112 is manufactured from CRES material. In one embodiment, CRES material for the outer raceway 112 is manufactured from 440C stainless steel. In one embodiment, the 440C stainless steel is AMS5630. In one embodiment, the 440C stainless steel is AMS 5618. In one embodiment, the 440C stainless steel is AMS 5880.

XD15NW® includes between 0.37 and 0.45 percent by weight carbon, up to 0.60 percent by weight silicon, up to 0.60 percent by weight manganese, between 15.00 and 16.5 percent by weight chromium, between 1.50 and 1.90 percent by weight molybdenum, between 0.20 and 0.40 percent by weight vanadium, between 0.16 and 0.25 percent by weight nitrogen and up to 0.30 percent by weight nickel.

The 440C stainless steel includes 0.95 - 1.20 percent by weight carbon, up to 1.00 percent by weight silicon, up to 1.0 percent by weight manganese, 16 to 18 percent by weight chromium, 0.40 to 0.65 percent by weight molybdenum, up to 0.04 weight percent phosphorous, up to 0.75 weight percent nickel, up to 0.75 weight percent copper and up to 0.03 weight percent sulfur.

Cronidur 30® includes between 0.25 and 0.35 percent by weight carbon, up to 1.00 percent by weight silicon, up to 1.00 percent by weight manganese, between 14.00 and 16.00 percent by weight chromium, up to 0.50 percent by weight nickel, between 0.85 and 1.10 percent by weight molybdenum and between 0.30 and 0.50 percent by weight nitrogen.

Referring to FIGS. D2 and D3 a cage 80 for the bearing 100 of FIG. B9 includes an annular ring 81 having a first axially facing surface 81A and a second axially facing surface 81B. The annular ring has a thickness Wo. The first axially facing surface 81A has a plurality of first rails 82A extending therefrom. The second axially facing surface 81B has a plurality of second rails 82B extending therefrom. Adjacent ones of the plurality of first rails 82A define a first pocket 83A therebetween. The first pockets 83A are equally spaced from one another. Adjacent ones of the plurality of second rails 82B define a second pocket 83B therebetween. The second pockets 83B are equally spaced from one another and are symmetrically offset from respective ones of the first pockets 83A. The cage 80 has a width W that extends between respective axial ends of the rails 82A and 82B. In one embodiment, the plurality of first rails 82A and the plurality of second rails 82B are opposite one another so that each of the plurality of the pockets 83A and 83B are opposite one another.

Referring to FIG. D7 and D8, each of the pockets 83A and 83B are defined by a cylindrical surface 84 formed in opposing circumferential facing portions of the each of the rails 82A and 82B, respectively. The cylindrical surfaces 84 of the pockets 83A are formed, for example, by plunge milling or drilling in an axial direction inwardly towards the first axially facing surface 81A. The cylindrical surfaces 84 of the pockets 83A are formed, for example, by plunge milling or drilling in an axial direction inwardly towards the second axially facing surface 81B. In one embodiment, the cage 80 includes forty two pockets 83A and forty two pockets 83B. However, any number of pockets per side may be employed including but not limited to 45, 48 or 52 pockets per side. Each of the pockets 83A and 83B has a cylindrical pocket diameter P of about 1.5 to 2.5 percent greater than a major diameter of the rollers. In one embodiment, each of the pockets 83A and 83B has a cylindrical pocket diameter of about 1.7 to 2.6 percent greater than a major diameter of the rollers 115. In one embodiment, the cage pockets diameters P are set at 1.024 times the roller diameter; that is cage pockets are 2.4 percent larger than the major diameter of the rollers 115.

Referring to FIG. D7 and D8, each of the pockets 83A and 83B have a spherical bottom surface 85. In addition to circumferential pocket clearance, there are axial clearances inboard; again when all components are centered. The cross section of this mid-rail resembles a triangle but with curved or crowned sides. This is done to prevent any roller edge loading and potential wears from any roller skewing.

In one embodiment, the cage 80 is manufactured from a high leaded tin bronze per ASTM B505, UNS C93200. However, the present invention is not limited in this regard as other materials may be employed including but not limited high strength manganese bronze (e.g., alloys C86300 or C86500).

The cage 80 is disposed between the inner race 110 and the outer race 112 with one of the plurality of rollers 115 rollingly engaged in each pocket as shown in FIGS. FIGS. D7 and D8. During operation of the bearing 100, the cage 80 pockets 83A and 83B limit skew of the rollers 115 to improve operation of the bearing 100 for oscillations, for example, oscillations greater than 25 degrees.

As shown in FIGS. D4 and D5 the cage defines a contact angle δ between the cage and a central axis of the bearing 100. With the inner and outer rings 110, 112 and rollers 115 centered, axes of the cage 80 pocket 83A and 83B and centers are coincident with roller axes and centers. In other words, the cage pockets 83A and 83B have the same slant or slope as bearing contact angle.

As shown in FIG. D6, the cage 80 has a radial thickness TR1 at a central portion of the annular ring 81. Each of the first rails 82A has a radial thickness TR2 at an axially distal end of the first rail 82A. Each of the second rails 82B has a radial thickness TR2 at an axially distal end of the second rail 82B. The rollers 115 have a major diameter DM (see FIG. D8) that is greater than the radial thickness TR of the first rail 82A and the second rail 82B so that the first radius R1 is greater than the second radius R2 and the third radius R3.

As shown in FIG. D6, the cage 81 has a central axis CA. The cage defines a first radius RR1 measured from the central axis CA to a radially outermost surface 82Z of the cage 81. In one embodiment, the radially outermost surface 82Z is cylindrical. The cage 81 defines a second radius RR2 measured from the central axis CA to a radially inwardmost surface 82X located at a juncture with the axially distal end of the first rail 82A. The cage 81 defines a third radius RR3 measured from the central axis CA to a radially innermost axial end 82Y of the first pocket 81A. The second rails 82B and second pockets 83B are configured in a similar manner. The first radius RR1 is greater than the second radius RR2 and the third radius RR3. The third radius RR3 is greater than the second radius RR2, thereby defining a taper between the radially innermost axial end 82Y of the first pocket 81A and the radially inwardmost surface 82X.

Referring to FIGS. D3 and D5, each of the first pockets 83A and each of the second pockets 83B have an axially outward facing convex spherical bottom surface 85. The spherical bottom surfaces have a radius of curvature Rp as shown in FIG. D5.

As shown in FIG. D5, each of the first rails 82A and each of the second rails 82B extend a length LR2 from the pocket bottom 85 such that the width W is two times the length LR plus the width Wo.

In one embodiment, the cage 80 is manufactured from a high leaded tin bronze per ASTM B505, UNS C93200.

The cage 80 is disposed between the inner race 110 and the outer race 112 with one roller of the plurality of rollers 115 rollingly engaged in each pocket. During operation of the bearing 100, the cage 80 causes the rollers to precess or index in response to small angular oscillatory movement between the inner race 110 and the outer race 112 thereby indexing the rollers through high load zones and into lower load zones within the bearing 100.

As shown in FIGS. D5 and D9, the cage defines a contact angle δ between the cage and a central axis A1 of the bearing 100. The length R1 is greater than an axial width LR1 of the hourglass rollers 115 as shown in FIG. D8.

While the present disclosure has been described with reference to various exemplary embodiments, it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiment disclosed as the best mode contemplated for carrying out this invention, but that the invention will include all embodiments falling within the scope of the appended claims.

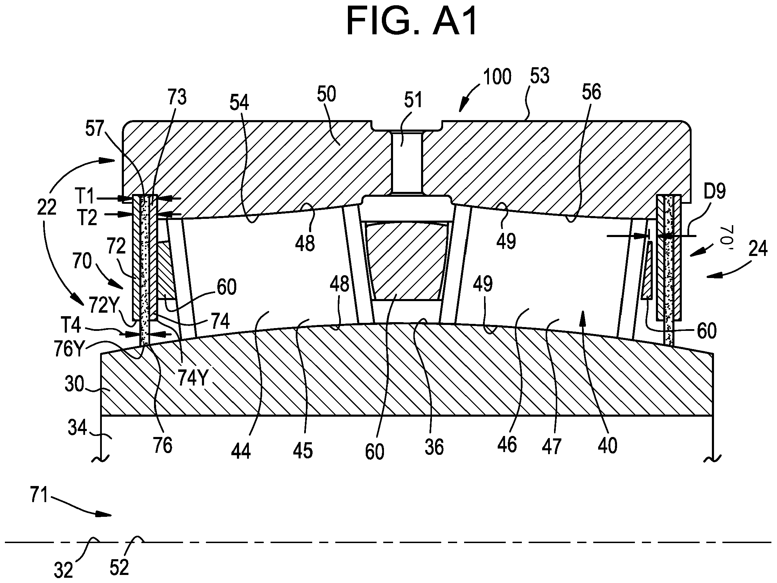

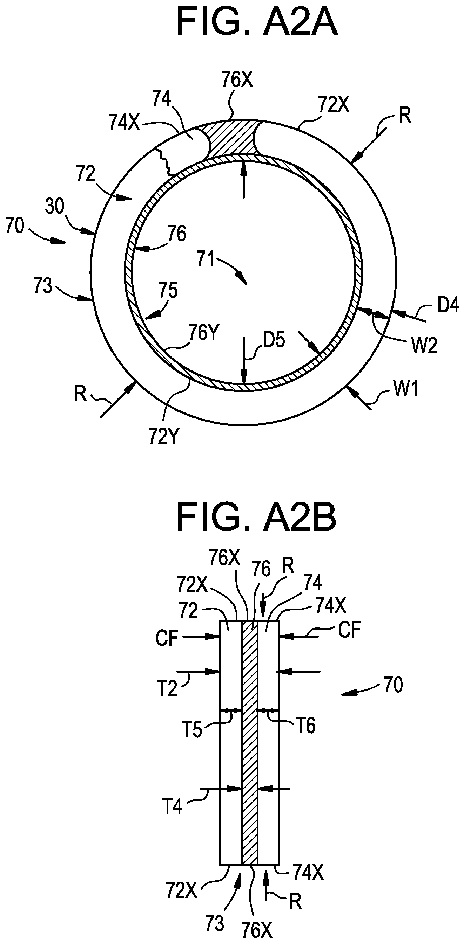

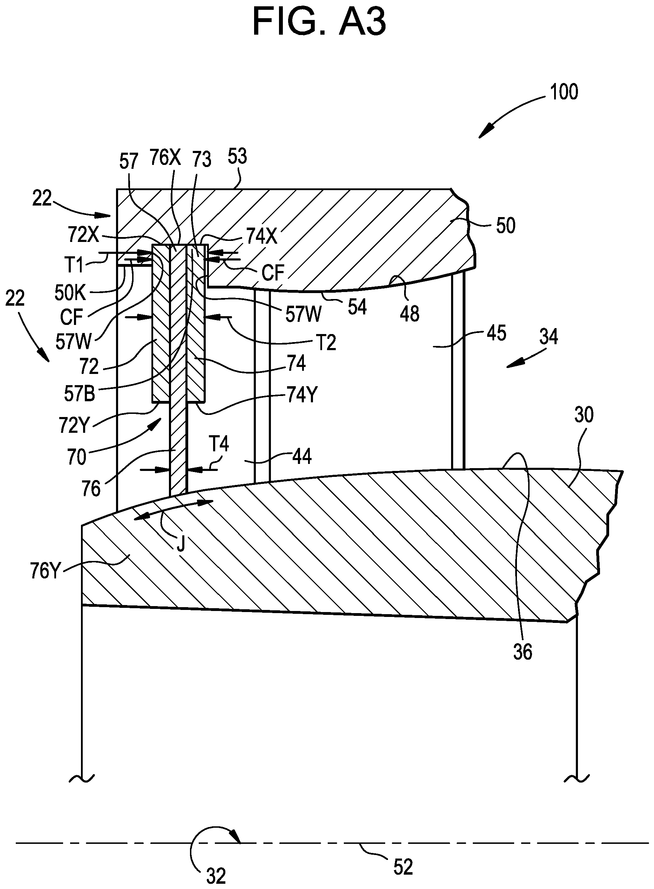

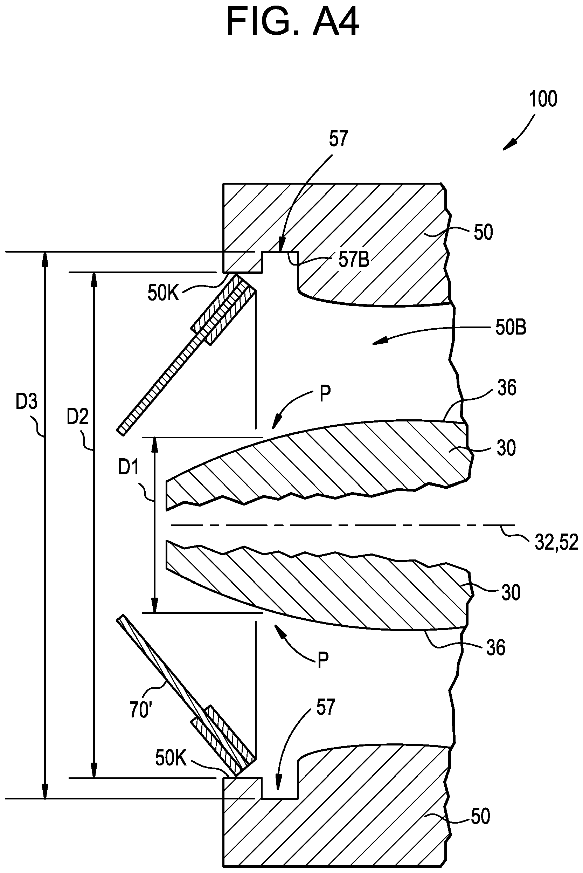

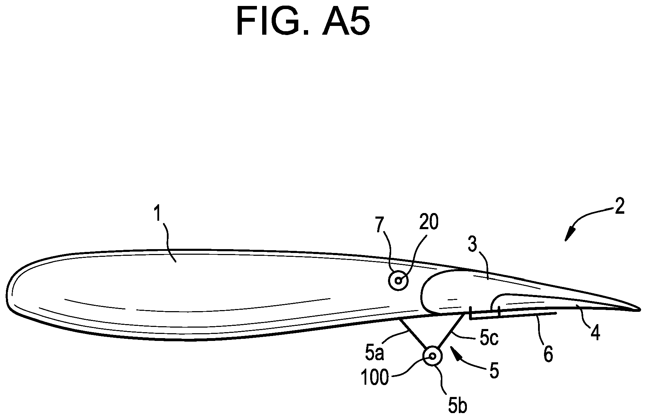

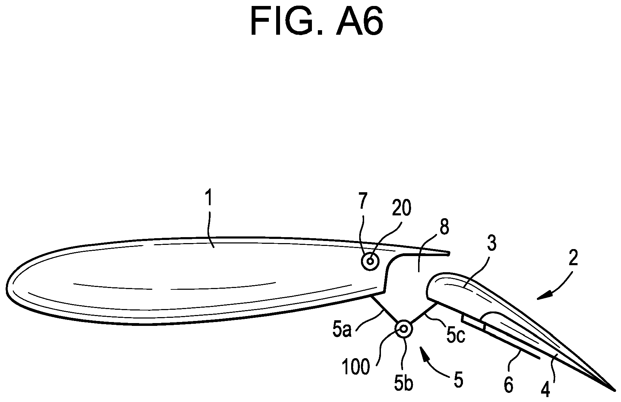

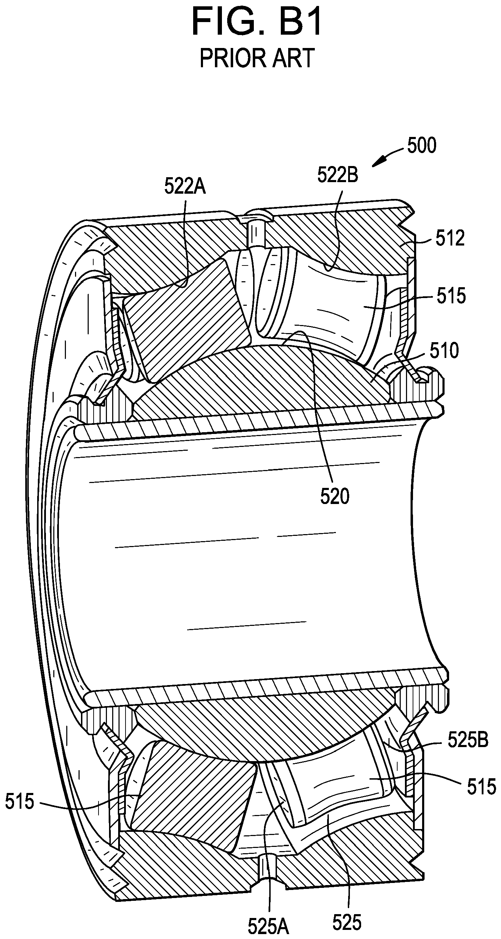

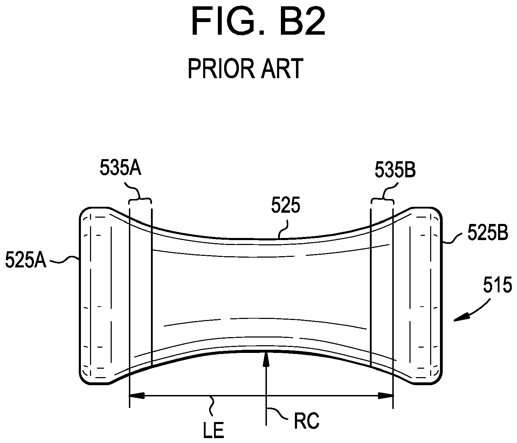

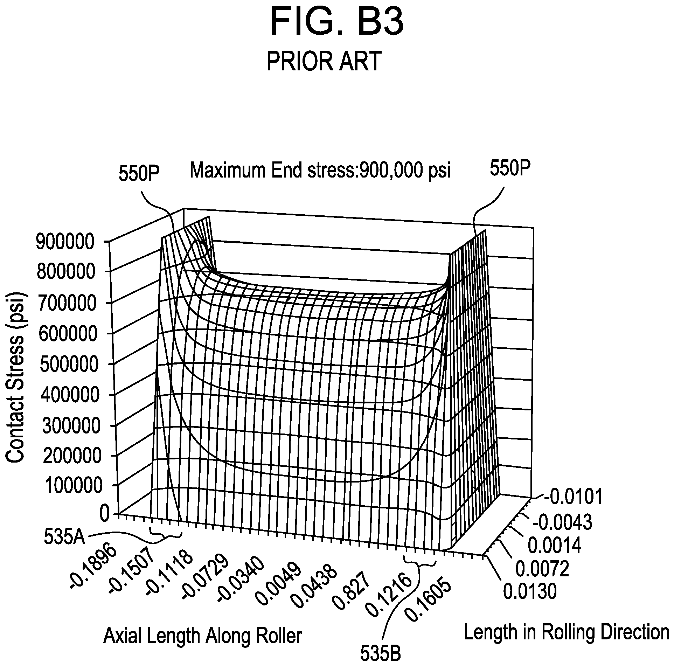

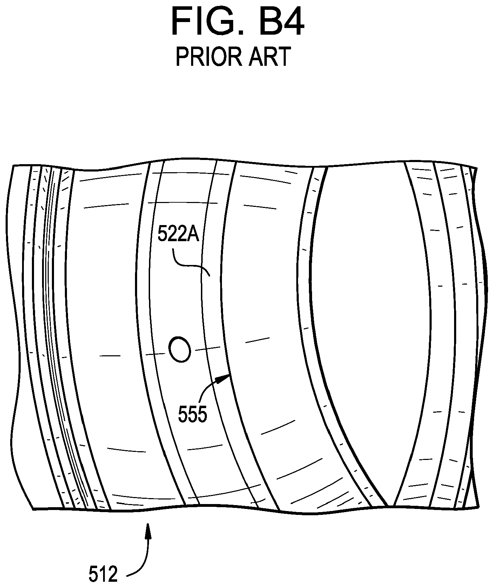

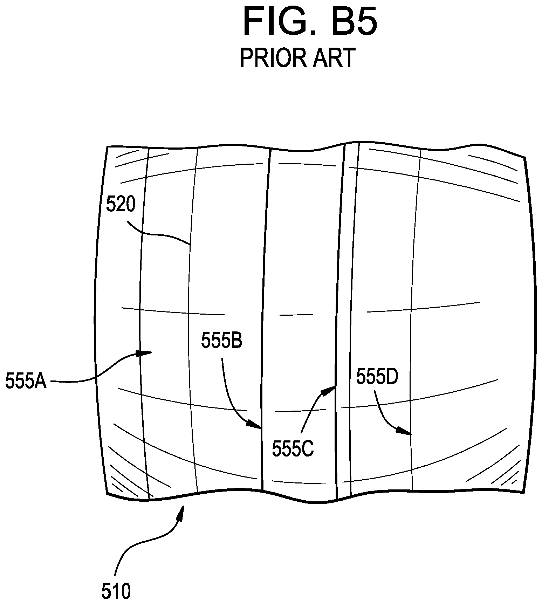

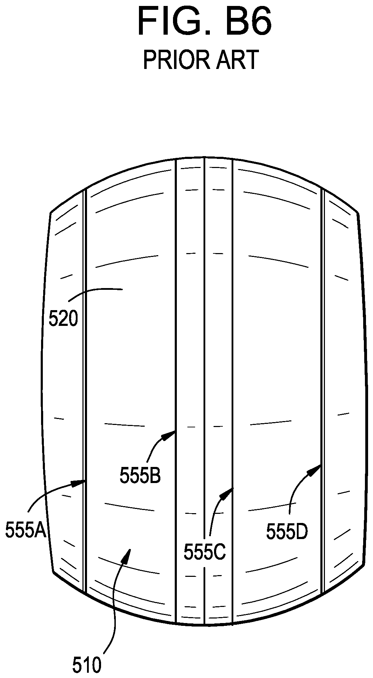

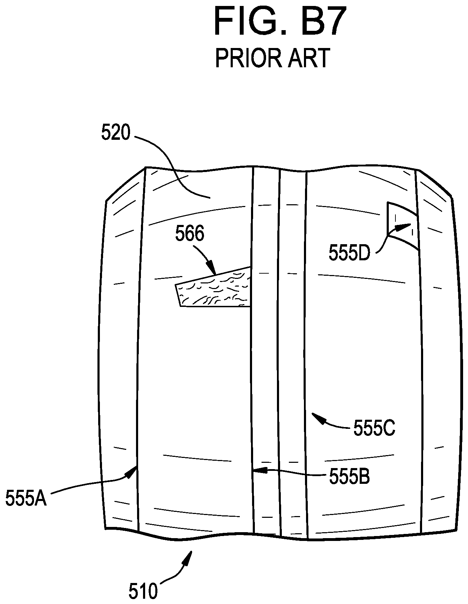

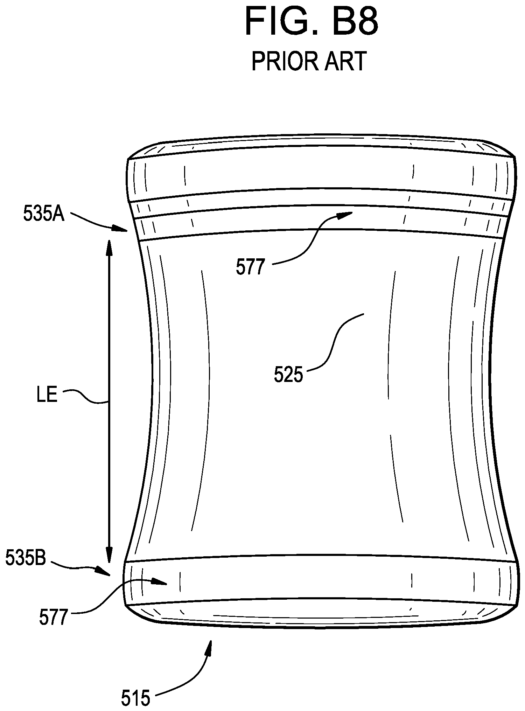

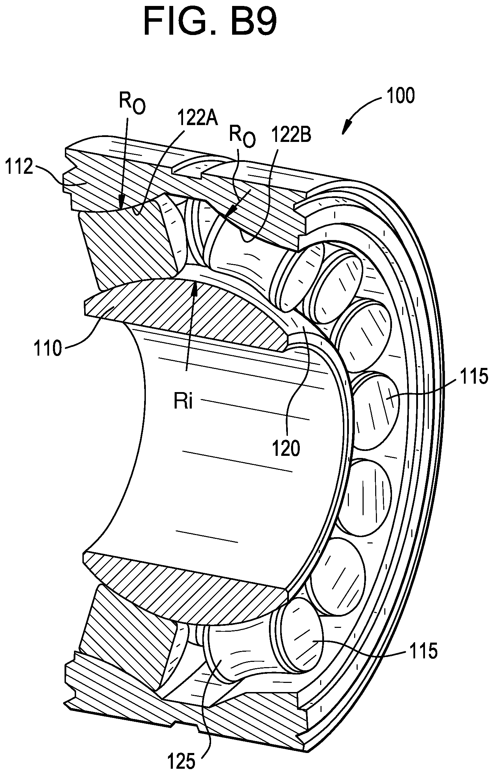

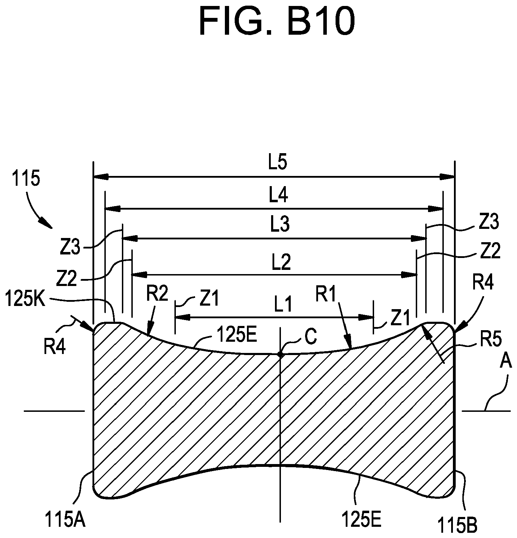

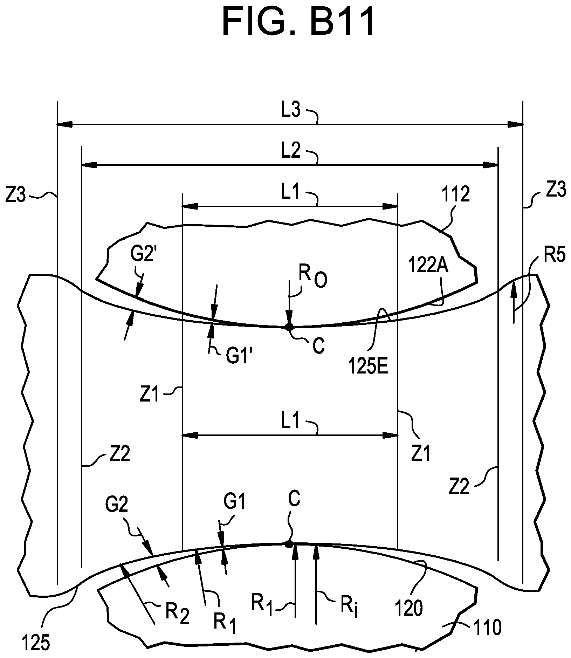

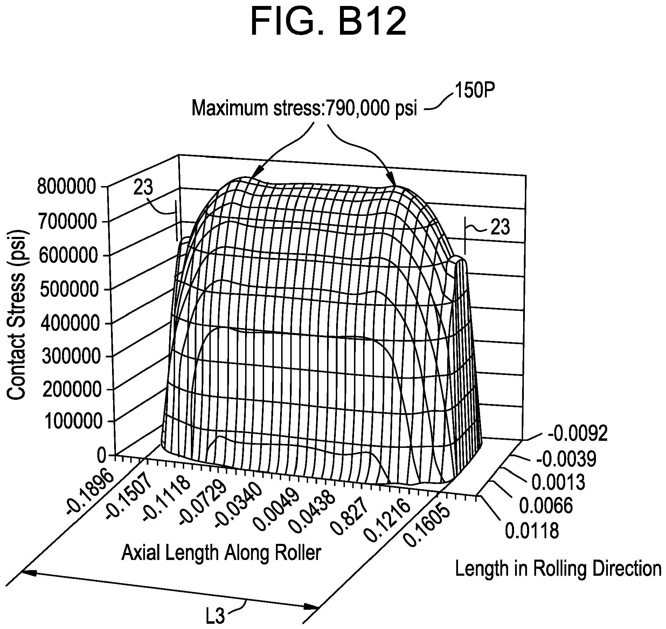

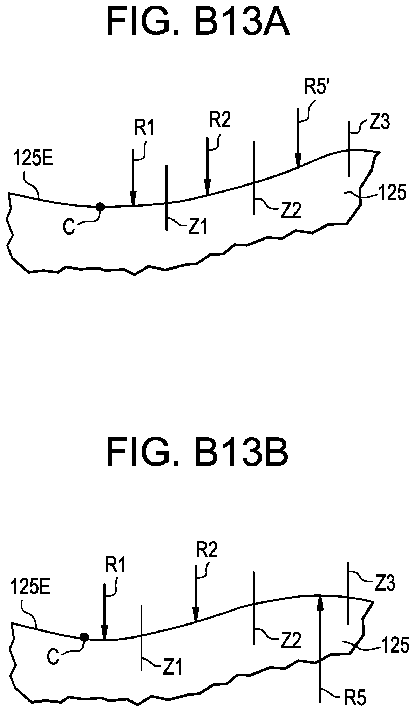

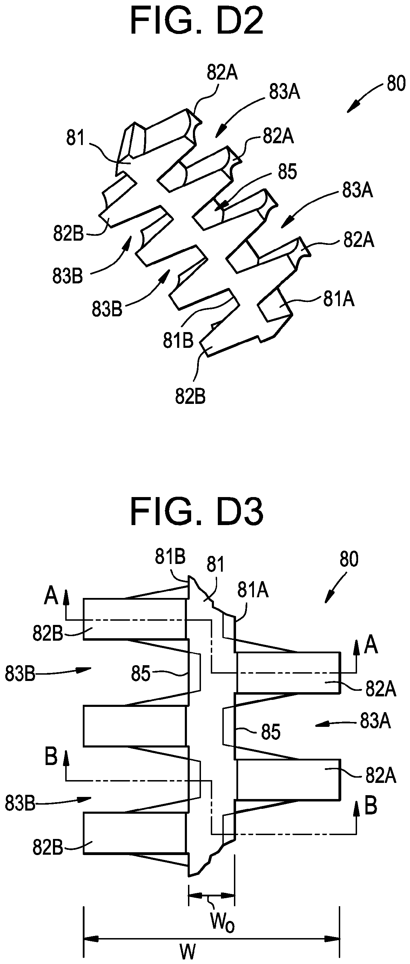

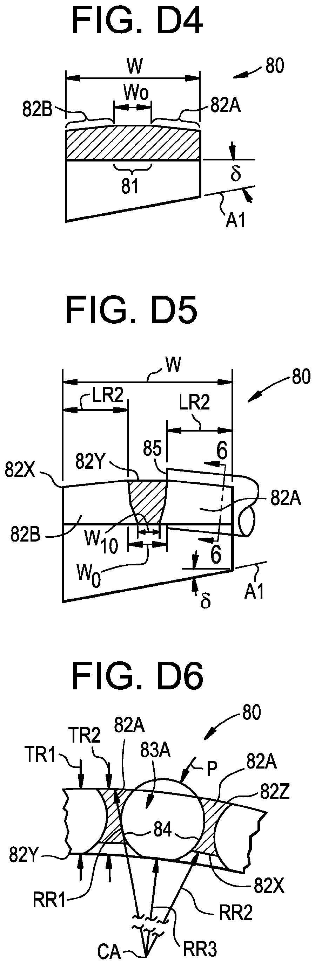

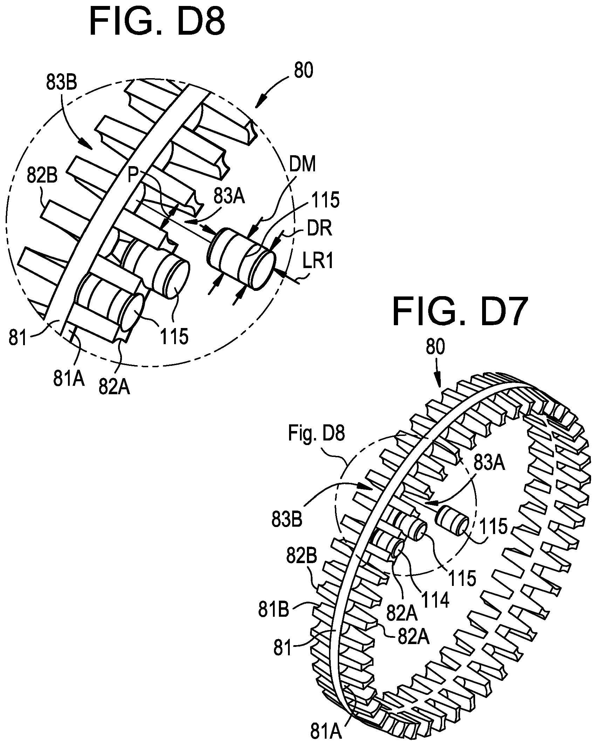

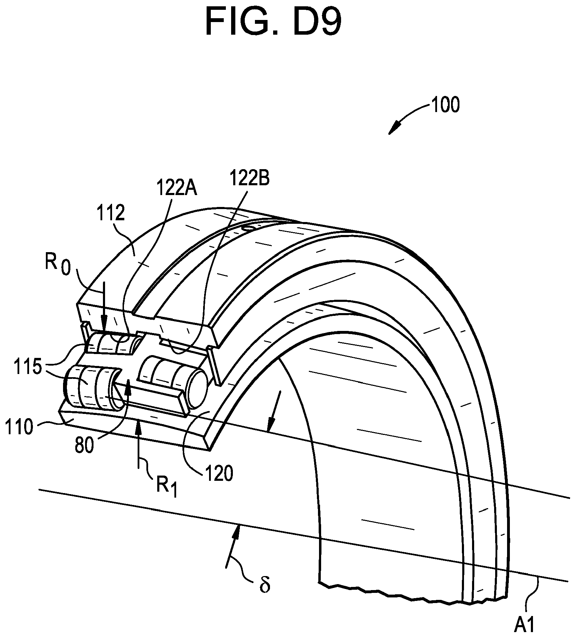

## Claims

1. An edge flap arrangement (2) for an aircraft wing, the arrangement comprising:
a main flap element (3) and an actuator (7) for moving the main flap element (3) relative to the aircraft wing;
a linkage arrangement (5) supporting the main flap element (3) from the aircraft wing for movement relative to the aircraft wing, the linkage arrangement (5) including a fixed strut (5a) secured to the aircraft wing and a drop link (5c) secured to the main flap element (3), the fixed strut (5a) and the drop link (5c) being pivotally connected by a hinge point (5b); and
at least a first hourglass bearing (100) disposed in at least one of the hinge point (5b) and the actuator, the first hourglass bearing (100) comprising:
an inner member defining an inner raceway (110) having a radially outwardly facing convex surface (120) having an inner raceway radius of curvature Ri;
an outer member defining an outer raceway (112) having a radially inward facing convex inner surface (122A), (122B) having an outer raceway radius of curvature Ro, the outer raceway (112) being positioned around the inner raceway (110);
at least one hourglass roller (115) disposed between the inner member and the outer member in rolling engagement with the inner raceway (110) and the outer raceway (112), the roller (115) comprising;
a circular cross section symmetrical about a longitudinal axis (A),
a first axial end (115A) and a second axial end (115B) and an axial width (LR1) extending between the first axial end (115A) and the second axial end (115B),
an exterior surface (125E) extending between the first axial end (115A) and the second axial end (115B),
the exterior surface defining a concave engagement surface (125E) extending outwardly from a central portion (C) of the roller (115),
the concave engagement surface (125E) having a first radius of curvature (R1) extending from the central portion (C) to each of two first transition zones (Z1) positioned on opposing sides of the central portion (C),
the concave engagement surface (125E) having a second radius of curvature (R2) extending outwardly from each of the two first transition zones (Z1) to each of two second transition zones (Z2); and
the second radius of curvature (R2) is greater than the first radius of curvature (R1);
at least one of the outer member, inner the member and the at least one hourglass roller (115) being fabricated from a corrosion resistant steel;
an annular seal assembly (70) snap-fit into the outer member, the annular seal assembly (70) comprising;
a first annular retaining ring (72) defining a first radially outermost portion (72X),
a second annular retaining ring (74) defining a second radially outermost portion (74X), and
a resilient ring (76) defining a third radially outermost portion (76X), the resilient ring (76) being disposed between the first annular retaining ring (72) and the second annular retaining ring (74),
the first radially outermost portion (72X), the second radially outermost portion (74X) and the third radially outermost portion (76X) being aligned with one another,
the resilient ring (76) projecting radially inward from the first annular retaining ring (72) and the second annular retaining ring (74), and
the resilient ring (76) being more compressible and flexible than the first annular retaining ring (72) and the second annular retaining ring (74); and a cage (80) disposed between the inner raceway (110) and the outer raceway (112), the cage (80) comprising,
an annular ring (81) having a first axial face (81A) and a second axial face (81B), a plurality of first rails (82A) extending a length from the first axial face (81A) and a plurality of second rails (82B) extending a length from the second axial face (81B), the length being of a magnitude greater than the axial width (LR1) of the hourglass rollers,
a plurality of pockets (83A), (83B), each of the plurality of pockets (83A), (83B) defined by opposing circumferentially facing walls of at least one of adjacent pairs of the first rails (82A) and adjacent pairs of the second rails (82B), and
the circumferentially facing walls (84) being arcuately formed so that each of the plurality of pockets (83A), (83B) is cylindrical.

2. The edge flap arrangement (2) of claim 1, wherein the corrosion resistant steel is a corrosion resistant nitrogen steel.

3. The edge flap arrangement (2) of claim 1, wherein the corrosion resistant steel is a 422 stainless steel.

4. The edge flap arrangement (2) of claim 1, wherein the corrosion resistant steel is a 440C stainless steel.

5. The edge flap arrangement (2) of any one of the preceding claims, wherein the hour glass bearing (100) is disposed in a structure of an aircraft.

## Patentansprüche

1. Angelenkte Nasenklappenanordnung (2) für einen Flugzeugflügel, wobei die Anordnung umfasst:
ein Hauptklappenelement (3) und einen Stellantrieb (7) zum Bewegen des Hauptklappenelementes (3) relativ zu dem Flugzeugflügel;
eine Anlenkungsanordnung (5), die das Hauptklappenelement (3) an dem Flugzeugflügel trägt, zur Bewegung relativ zu dem Flugzeugflügel, wobei die Anlenkungsanordnung (5) eine an dem Flugzeugflügel befestigte feststehende Strebe (5a) und eine an dem Hauptklappenelement (3) befestigte Koppelstange (5c) einschließt, wobei die feststehende Strebe (5a) und die Koppelstange (5c) durch ein ebenes Gelenk (5b) schwenkbar verbunden sind; und
zumindest ein erstes sanduhrförmiges Lager (100), das in dem ebenen Gelenk (5b) oder/und dem Stellantrieb angeordnet ist, wobei das erste sanduhrförmige Lager (100) umfasst:
ein Innenglied, das einen Innenring (110) mit einer radial nach außen gewandten konvexen Oberfläche (120) mit einem Innenringkrümmungsradius Ri bestimmt;
ein Außenglied, das einen Außenring (112) mit einer radial nach innen gewandten konvexen Innenfläche (122A), (122B) mit einem Außenringkrümmungsradius Ro bestimmt, wobei der Außenring (112) um den Innenring (110) herum positioniert ist;
mindestens eine sanduhrförmige Rolle (115), die zwischen dem Innenglied und dem Außenglied in rollendem Eingriff mit dem Innenring (110) und dem Außenring (112) angeordnet ist, wobei die Rolle (115) umfasst;
einen kreisförmigen Querschnitt, der um eine Längsachse (A) herum symmetrisch ist,
ein erstes axiales Ende (115A) und ein zweites axiales Ende (115B) und eine axiale Breite (LR1), die sich zwischen dem ersten axialen Ende (115A) und dem zweiten axialen Ende (115B) erstreckt,
eine Außenfläche (125E), die sich zwischen dem ersten axialen Ende (115A) und dem zweiten axialen Ende (115B) erstreckt,
wobei die Außenfläche eine konkave Eingriffsfläche (125E) bestimmt, die sich von einem Mittelabschnitt (C) der Rolle (115) aus nach außen erstreckt,
wobei die konkave Eingriffsfläche (125E) einen ersten Krümmungsradius (R1) aufweist, der sich von dem Mittelabschnitt (C) aus zu jeder von zwei ersten Übergangszonen (Z1) erstreckt, die auf gegenüberliegenden Seiten des Mittelabschnittes (C) positioniert sind,
wobei die konkave Eingriffsfläche (125E) einen zweiten Krümmungsradius (R2) aufweist, der sich von jeder der zwei ersten Übergangszonen (Z1) aus nach außen zu jeder von zwei zweiten Übergangszonen (Z2) erstreckt; und
wobei der zweite Krümmungsradius (R2) größer als der erste Krümmungsradius (R1) ist;
wobei das Außenglied oder/und das Innenglied oder/und die mindestens eine sanduhrförmige Rolle (115) aus einem korrosionsbeständigen Stahl gefertigt ist/sind;
eine ringförmige Dichtanordnung (70), die in das Außenglied eingeschnappt ist, wobei die ringförmige Dichtanordnung (70) umfasst;
einen ersten Haltering mit kreisförmigem Querschnitt (72), der einen ersten radial äußersten Abschnitt (72X) bestimmt,
einen zweiten Haltering mit kreisförmigem Querschnitt (74), der einen zweiten radial äußersten Abschnitt (74X) bestimmt, und
einen elastischen Ring (76), der einen dritten radial äußersten Abschnitt (76X) bestimmt, wobei der elastische Ring (76) zwischen dem ersten Haltering mit kreisförmigem Querschnitt (72) und dem zweiten Haltering mit kreisförmigem Querschnitt (74) angeordnet ist,
wobei der erste radial äußerste Abschnitt (72X), der zweite radial äußerste Abschnitt (74X) und der dritte radial äußerste Abschnitt (76X) aufeinander ausgerichtet sind,
wobei der elastische Ring (76) von dem ersten Haltering mit kreisförmigem Querschnitt (72) und dem zweiten Haltering mit kreisförmigem Querschnitt (74) aus radial nach innen vorspringt und
wobei der elastische Ring (76) zusammendrückbarer und flexibler als der erste Haltering mit kreisförmigem Querschnitt (72) und der zweite Haltering mit kreisförmigem Querschnitt (74) ist; und
einen Käfig (80), der zwischen dem Innenring (110) und dem Außenring (112) angeordnet ist, wobei der Käfig (80) umfasst,
einen Ring mit kreisförmigem Querschnitt (81) mit einer ersten axialen Außenfläche (81A) und einer zweiten axialen Außenfläche (81B), einer Mehrzahl von ersten Schienen (82A), die sich eine Länge von der ersten axialen Außenfläche (81A) aus erstrecken, und einer Mehrzahl von zweiten Schienen (82B), die sich eine Länge von der zweiten axialen Außenfläche (81B) aus erstrecken, wobei die Länge eine Größenordnung aufweist, die größer als die axiale Breite (LR1) der sanduhrförmigen Rollen ist,
eine Mehrzahl von Taschen (83A), (83B), wobei jede der Mehrzahl von Taschen (83A), (83B) durch gegenüberliegende, zirkumferenziell gerichtete Wände von benachbarten Paaren der ersten Schienen (82A) oder/und benachbarten Paaren der zweiten Schienen (82B) bestimmt ist, und
wobei die zirkumferenziell gerichteten Wände (84) bogenförmig ausgebildet sind, so dass jede der Mehrzahl von Taschen (83A), (83B) zylindrisch ist.

2. Angelenkte Nasenklappenanordnung (2) nach Anspruch 1, wobei der korrosionsbeständige Stahl ein korrosionsbeständiger Stickstoffstahl ist.

3. Angelenkte Nasenklappenanordnung (2) nach Anspruch 1, wobei der korrosionsbeständige Stahl ein rostfreier Stahl 422 ist.

4. Angelenkte Nasenklappenanordnung (2) nach Anspruch 1, wobei der korrosionsbeständige Stahl ein rostfreier Stahl 440C ist.

5. Angelenkte Nasenklappenanordnung (2) nach einem der vorangehenden Ansprüche, wobei das sanduhrförmige Lager (100) in einer Struktur eines Flugzeuges angeordnet ist.

## Revendications

1. Agencement de volet de bord (2) pour une aile d'aéronef, l'agencement comprenant :
un élément de volet principal (3) et un actionneur (7) pour déplacer l'élément de volet principal (3) par rapport à l'aile d'aéronef ;
un agencement d'embiellage (5) supportant l'élément de volet principal (3) à partir de l'aile d'aéronef afin qu'il puisse se déplacer par rapport à l'aile d'aéronef, l'agencement de liaison (5) comprenant une entretoise fixe (5a) fixée à l'aile d'aéronef et une biellette (5c) solidaire de l'élément de volet principal (3), l'entretoise fixe (5a) et la biellette (5c) étant reliées de manière pivotante par un point d'articulation (5b) ; et
au moins un premier palier en forme de sablier (100) disposé dans au moins l'un du point d'articulation (5b) et de l'actionneur, le premier palier en forme de sablier (100) comprenant :
un élément interne définissant un chemin de roulement interne (110) ayant une face convexe tournée radialement vers l'extérieur (120) ayant un rayon de courbure de chemin de roulement interne Ri ;
un élément externe définissant un chemin de roulement externe (112) ayant une surface interne convexe tournée radialement vers l'intérieur (122A), (122B) ayant un rayon de courbure de chemin de roulement externe Ro, le chemin de roulement externe (112) étant positionné autour du chemin de roulement interne (110) ;
au moins un rouleau en forme de sablier (115) disposé entre l'élément interne et l'élément externe en coopération de roulement avec le chemin de roulement interne (110) et le chemin de roulement externe (112), le rouleau (115) comprenant ;
une section transversale circulaire symétrique par rapport à un axe longitudinal (A),
une première extrémité axiale (115A) et une seconde extrémité axiale (115B) et une largeur axiale (LR1) s'étendant entre la première extrémité axiale (115A) et la seconde extrémité axiale (115B),
une surface extérieure (125E) s'étendant entre la première extrémité axiale (115A) et la seconde extrémité axiale (115B),
la surface extérieure définissant une surface de coopération concave (125E) s'étendant vers l'extérieur depuis une partie centrale (C) du rouleau (115),
la surface de mise en prise concave (125E) ayant un premier rayon de courbure (R1) s'étendant à partir de la partie centrale (C) vers chacune de deux premières zones de transition (Z1) positionnées sur des côtés opposés de la partie centrale (C),
la surface de mise en prise concave (125E) ayant un second rayon de courbure (R2) s'étendant vers l'extérieur depuis chacune des deux premières zones de transition (Z1) vers chacune de deux secondes zones de transition (Z2) ; et
le second rayon de courbure (R2) est supérieur au premier rayon de courbure (R1) ;
au moins un parmi l'élément externe, l'élément interne et le au moins un rouleau en forme de sablier (115) étant fabriqué à partir d'un acier résistant à la corrosion ;
un ensemble de joint d'étanchéité annulaire (70) à encliqueter dans l'élément externe, l'ensemble de joint d'étanchéité annulaire (70) comprenant ;
une première bague de retenue annulaire (72) définissant une première partie radialement la plus à l'extérieur (72X),
une seconde bague de retenue annulaire (74) définissant une deuxième partie radialement la plus à l'extérieur (74X), et
une bague élastique (76) définissant une troisième partie radialement la plus à l'extérieur (76X), la bague élastique (76) étant disposée entre la première bague de retenue annulaire (72) et la seconde bague de retenue annulaire (74),
la première partie radialement la plus à l'extérieur (72X), la deuxième partie radialement la plus à l'extérieur (74X) et la troisième partie radialement la plus à l'extérieur (76X) étant alignées les unes avec les autres,
la bague élastique (76) faisant saillie radialement vers l'intérieur depuis la première bague de retenue annulaire (72) et la seconde bague de retenue annulaire (74), et
la bague élastique (76) étant plus compressible et flexible que la première bague de retenue annulaire (72) et la seconde bague de retenue annulaire (74) ; et une cage (80) disposée entre le chemin de roulement interne (110) et le chemin de roulement externe (112), la cage (80) comprenant :
une bague annulaire (81) ayant une première face axiale (81A) et une seconde face axiale (81B), une pluralité de premiers rails (82A) s'étendant sur une longueur depuis la première face axiale (81A) et une pluralité de seconds rails (82B)) s'étendant sur une longueur à partir de la seconde face axiale (81B), la longueur étant d'une valeur supérieure à la largeur axiale (LR1) des rouleaux en forme de sablier, une pluralité de poches (83A), (83B), chacune de la pluralité de poches (83A), (83B) définie par des parois opposées faisant face circonférentiellement d'au moins l'une de paires adjacentes des premiers rails (82A) et de paires adjacentes des seconds rails (82B), et
les parois (84) faisant face à la circonférence sont formées en arc de sorte que chacune de la pluralité de poches (83A), (83B) est cylindrique.

2. Agencement de volet de bord (2) selon la revendication 1, dans lequel l'acier résistant à la corrosion est un acier à l'azote résistant à la corrosion.

3. Agencement de volet de bord (2) selon la revendication 1, dans lequel l'acier résistant à la corrosion est un acier inoxydable 422.

4. Agencement de volet de bord (2) selon la revendication 1, dans lequel l'acier résistant à la corrosion est un acier inoxydable 440C.

5. Agencement de volet de bord (2) selon l'une quelconque des revendications précédentes, dans lequel le palier en forme de sablier (100) est disposé dans une structure d'un aéronef.
